# FASCICULE DE BREVET EUROPEEN

(11) **EP 3 080 706 B1**
(45) Date de publication et mention de la délivrance du brevet: **05.12.2018**
(21) Numéro de dépôt: 14825422.0
(22) Date de dépôt: 12.12.2014
(51) Int. Cl.: G06F 13/40

(54) **PROCÉDÉ DE SAUVEGARDE DE DONNÉES STOCKÉES SUR UN TERMINAL**
VERFAHREN ZUR SICHERUNG VON AUF EINEM ENDGERÄT GESPEICHERTEN DATEN
METHOD OF BACKUP OF DATA STORED IN A TERMINAL

(30) Priorité: 12.12.2013 FR 1362454
(43) Date de publication de la demande: 19.10.2016
(73) Titulaire: Wooxo, 13600 La Ciotat (FR)
(72) Inventeur: D'URSO, Luc, 13600 La Ciotat (FR)
(74) Mandataire: Verriest, Philippe
(86) Numéro de dépôt international: PCT/FR2014/053311
(87) Numéro de publication internationale: WO 2015/087018

(56) Documents cités:
- US-A1- 2006 129 608
- US-A1- 2010 131 727

## Description

La présente invention se rapporte à des moyens de sauvegarde adaptés notamment pour prendre en charge la sauvegarde de données stockées sur des terminaux itinérants. Elle concerne plus particulièrement des moyens autorisant la sauvegarde de données produites par des terminaux mobiles, notamment lorsque ces derniers ne peuvent accéder au serveur de sauvegarde usuel.

Dans le contexte d'un réseau de communication assurant l'interconnexion entre une pluralité de terminaux informatiques, les données produites et stockées sur lesdits terminaux sont généralement collectées périodiquement par des moyens de sauvegardes centralisés, accessibles par l'intermédiaire du réseau de communication, lors de l'exécution de processus de sauvegarde. Typiquement, les moyens de sauvegarde comportent des serveurs de sauvegarde accessibles aux terminaux par l'entremise d'un réseau local. Toutefois, cette architecture usuelle montre ces limites, lorsqu'il s'agit de traiter les données produites par des terminaux mobiles, en particulier lorsque ces derniers ne peuvent accéder au réseau par lequel les moyens de sauvegardes sont accessibles. Ce cas d'usage se produit typiquement lorsque les terminaux, par exemple des ordinateurs portables, sont déconnectés du réseau local permettant l'accès aux serveurs de sauvegarde, en cas d'itinérance notamment, c'est-à-dire en cas de déplacement hors de la zone d'accès audit réseau, ou encore lorsque les serveurs de sauvegarde ne sont pas disponibles. Les données produites par ces terminaux, pendant la période au cours de laquelle ils ne peuvent accéder aux moyens de sauvegarde, sont de fait exclues du processus de sauvegarde, le volume de données étant typiquement fonction de la durée de ladite période et pouvant atteindre une valeur très significative.

US2010/131727A1 décrit un système de sauvegarde de données mettant en oeuvre de manière avantageuse une sauvegarde instantanée sans dépendance avec un volume positif en termes de performance et d'échec, et avec une efficacité de capacité élevée.

Pour tenter de répondre à ces limites, il est connu d'utiliser des moyens d'accès distant au réseau de communication par lequel les moyens de sauvegarde sont accessibles. Un réseau privé virtuel - virtual private network en anglais - peut être utilisé pour créer un tunnel sécurisé entre le terminal connecté à Internet et le réseau de communication local auquel sont connectés les moyens de sauvegarde. Toutefois, la mise en oeuvre de moyens d'accès distant s'avère complexe. En effet, des moyens spécifiques doivent être mis en oeuvre sur les terminaux, mais également sur le réseau de communication locale. Une gestion complexe de la sécurité doit encore être mise en oeuvre, nécessitant une configuration de chaque terminal, et des mises à jour fréquentes pour garantir la sécurité. En outre, les ressources matérielles requises s'avèrent typiquement importantes. Le débit de données entre le terminal et les moyens de sauvegardes dépend du débit entrant de la connexion Internet du terminal, qui peut être limité.

Il est aussi connu d'utiliser des moyens secondaires de sauvegarde, dédiés, pour assurer la sauvegarde de données lorsque les terminaux sont en itinérance. Les moyens secondaires de sauvegarde sont typiquement accessibles par Internet. Par exemple, un agent de sauvegarde peut être configuré, sur chaque terminal, pour transférer les données produites pendant la période d'itinérance, vers une infrastructure de stockage de type informatique dématérialisée, plus généralement désignée par le terme anglo-saxon de «cloud computing». Cependant, cette solution nécessite de mettre en oeuvre des moyens spécifiques supplémentaires, sur chaque terminal, pour effectuer le processus de sauvegarde. En outre, les données sauvegardées finissent par être dupliquées entre les moyens de sauvegardes accessibles via le réseau local, et les moyens secondaires de sauvegarde. Reconstruire un ensemble des données cohérent à partir deux jeux de sauvegardes distincts peut encore s'avérer complexe.

C'est pourquoi il existe encore un besoin pour des moyens aptes à permettre la sauvegarde d'un jeu cohérent de données produites par un terminal, y compris lorsque ce dernier ne peut accéder à des moyens locaux de sauvegarde.

Un des objets de l'invention est de fournir des moyens efficaces de sauvegarde d'un jeu cohérent de données produites par un terminal, y compris lorsque ce dernier est en itinérance. Un autre objet de l'invention est de fournir des moyens de sauvegarde ne nécessitant pas l'emploi de tunnel sécurisé entre le terminal connecté à Internet et le réseau de communication local auquel sont connectés les moyens de sauvegarde. Un autre objet de l'invention est de fournir une solution simple et légère apte à être déployé sur une grande variété de terminaux, y compris de terminaux disposant de ressources limités.

Un ou plusieurs de ces objets sont remplis par le procédé, le terminal, le système, le programme d'ordinateur et le support d'enregistrement selon les revendications indépendantes. Les revendications dépendantes fournissent en outre des solutions à ces objets et/ou d'autres avantages.

Plus particulièrement, selon un premier aspect, l'invention se rapporte à un procédé de sauvegarde de données stockées sur un terminal. Le terminal comporte des moyens de connexions à un réseau local par l'intermédiaire duquel des moyens primaires de sauvegarde sont accessibles. Le terminal comporte en outre des moyens de connexions à un deuxième réseau par l'intermédiaire duquel des moyens secondaires de sauvegarde sont accessibles.

Le procédé comporte les étapes suivantes:
- détermination d'un ensemble de données à sauvegarder parmi les données stockées sur le terminal;
- si le terminal est connecté au réseau local, transfert de l'ensemble de données aux moyens primaires de sauvegarde;
- si le terminal est connecté au deuxième réseau,
   - transfert de l'ensemble de données aux moyens secondaires de sauvegarde; et,
   - réplication de l'ensemble de données reçu par les moyens secondaires de sauvegarde sur les moyens primaires de sauvegarde.

Le réseau local est par exemple un réseau informatique de type réseau IP, utilisé dans une organisation, un site ou une entreprise pour interconnecter une pluralité de terminaux. Le réseau local peut être déployé sur un même site ou constitué de sous-réseaux locaux déployés sur divers sites géographiquement distants. Le réseau local comporte par exemple des moyens d'interconnexion permettent l'échange de données entre des serveurs, des ordinateurs de bureau, des ordinateurs portables, des tablettes, des téléphones, etc. Le terminal comporte par exemple des moyens de connexion au réseau local.

Le deuxième réseau est par exemple un réseau permettant l'accès à Internet et/ou à une infrastructure réseau fournissant des services de type informatique dématérialisée, plus généralement désignée par le terme anglo-saxon de «cloud computing». Le terminal comporte par exemple des moyens de connexion au réseau secondaire.

Les moyens primaires et secondaires de sauvegarde comportent typiquement des serveurs de sauvegarde aptes à recevoir des données, les stocker et permettre la reconstitution de différentes versions desdites données correspondant aux modifications successives apportées.

Ainsi, lorsque le terminal est connecté au réseau local, les données à sauvegarder peuvent être transférées aux moyens primaires de sauvegarde pour être sauvegardées normalement. Lorsque le terminal n'est pas connecté au réseau local, par exemple lorsque l'utilisateur est en déplacement hors des locaux de l'entreprise dans lesquels il accède normalement au réseau local, les données à sauvegarder peuvent être transférées aux moyens secondaires de sauvegarde. Les données sauvegardées sur les moyens secondaires de sauvegarde sont ensuite répliquées sur les moyens primaires de sauvegarde, afin que ces derniers puissent disposer de l'ensemble des données sauvegardé. Lorsque le terminal est à nouveau connecté au réseau local, il peut à nouveau procéder à la sauvegarde des données sur les moyens primaires de sauvegarde, ces derniers disposant alors d'un jeu complet de données sauvegardées grâce à la réplication.

Les informations permettant d'identifier les données transmises aux moyens primaires et aux moyens secondaires de sauvegarde peuvent être consignées dans un journal de données sauvegardées, au cours d'une étape de mise à jour. Des informations permettant d'identifier la date de la dernière modification apportée aux données transmises aux moyens primaires et aux moyens secondaires de sauvegarde peuvent également être consignées dans un journal de données sauvegardées, au cours d'une étape de mise à jour. L'ensemble de données à sauvegarder peut alors être déterminé en identifiant parmi les données stockées sur le terminal celles pour lesquelles aucune information n'est comprise dans le journal.

Selon un deuxième aspect, l'invention se rapporte à un procédé de sauvegarde de données stockées sur un terminal, le terminal comportant des moyens de connections à un réseau local par l'intermédiaire duquel des moyens primaires de sauvegarde sont accessibles, le terminal comportant en outre des moyens de connections à un deuxième réseau par l'intermédiaire duquel des moyens secondaires de sauvegarde sont accessibles, caractérisé en ce qu'il comporte les étapes suivantes:
- détermination d'un ensemble de données à sauvegarder parmi les données stockées sur le terminal;
- si le terminal est connecté au réseau local, et si les moyens primaires de sauvegarde sont disponibles pour opérer une sauvegarde supplémentaire, transfert de l'ensemble de données aux moyens primaires de sauvegarde;
- si le terminal est connecté au réseau local, et si les moyens primaires de sauvegarde sont indisponibles pour opérer une sauvegarde supplémentaire,
- transfert de l'ensemble de données aux moyens secondaires de sauvegarde;
   - réplication de l'ensemble de données reçu par les moyens secondaires de sauvegarde sur les moyens primaires de sauvegarde.
- si le terminal est connecté au deuxième réseau :
   - transfert de l'ensemble de données aux moyens secondaires de sauvegarde; et,
   - réplication de l'ensemble de données reçu par les moyens secondaires de sauvegarde sur les moyens primaires de sauvegarde.

Grâce à cette disposition, dans le cas où terminal est connecté au réseau local, et si les moyens primaires de sauvegarde sont indisponibles pour opérer une sauvegarde supplémentaire, la réplication de l'ensemble de données reçu par les moyens secondaires de sauvegarde sur les moyens primaires de sauvegarde est réalisé lors d'une phase ultérieure dans laquelle les moyens primaires de sauvegarde sont à nouveau disponible pour réaliser une sauvegarde supplémentaire.

Selon ce deuxième aspect, les moyens primaires de sauvegarde peuvent être accessibles mais pas disponibles pour opérer une sauvegarde supplémentaire, car les moyens primaires de sauvegarde sont saturés et/ou en maintenance. Dès lors, afin d'éviter une perte de données liée à cette indisponibilité, les moyens secondaires de sauvegarde sont mis à disposition afin de permettre une continuité de sauvegarde.

Selon un troisième aspect, l'invention se rapporte à un module de sauvegarde de données adapté à être embarqué sur un terminal comportant des moyens de connections à un réseau local par l'intermédiaire duquel des moyens primaires de sauvegarde sont accessibles, et des moyens de connections à un deuxième réseau par l'intermédiaire duquel des moyens secondaires de sauvegarde sont accessibles, caractérisé en ce qu'il comporte des moyens de traitement configuré de sorte à:
- déterminer un ensemble de données à sauvegarder parmi les données stockées sur le terminal;
- si les moyens primaires de sauvegarde sont accessible au terminal, transférer l'ensemble de données aux moyens primaires de sauvegarde;
- si les moyens primaires de sauvegarde ne sont pas accessibles au terminal :
   - transférer l'ensemble de données aux moyens secondaires de sauvegarde ; et,
   - transmettre à un module de synchronisation, une information indiquant qu'une réplication de l'ensemble de données reçu par les moyens secondaires de sauvegarde sur les moyens primaires de sauvegarde est nécessaire, après vérification d'un journal de données sauvegardées.

Le module de sauvegarde est par exemple une application, installée sur le terminal, adaptée pour accéder aux données stockées localement, et configurée de sorte à permettre la sauvegarde desdites données.

Les moyens de traitement peuvent en outre être configurés de sorte que des informations permettant d'identifier les données transmises aux moyens primaires et aux moyens secondaires de sauvegarde soient consignées dans un journal de données sauvegardées. Les moyens de traitement peuvent encore être configurés de sorte à déclencher l'envoi de l'information qu'une réplication de l'ensemble de données reçu par les moyens secondaires de sauvegarde sur les moyens primaires de sauvegarde est nécessaire, si l'ensemble des données transmis aux moyens primaires de sauvegarde ne comprend pas toutes les données identifiées dans le journal.

En particulier, le deuxième réseau peut être un réseau permettant l'accès à Internet.

Selon un quatrième aspect, l'invention se rapporte à module de sauvegarde de données adapté à être embarqué sur un terminal comportant des moyens de connections à un réseau local par l'intermédiaire duquel des moyens primaires de sauvegarde sont accessibles, et des moyens de connections à un deuxième réseau par l'intermédiaire duquel des moyens secondaires de sauvegarde sont accessibles, caractérisé en ce qu'il comporte des moyens de traitement configuré de sorte à:
- déterminer un ensemble de données à sauvegarder parmi les données stockées sur le terminal;
- si les moyens primaires de sauvegarde sont accessible au terminal et si les moyens primaires de sauvegarde sont disponibles pour opérer une sauvegarde supplémentaire, transférer l'ensemble de données aux moyens primaires de sauvegarde et un module de synchronisation réplique l'ensemble de données reçu par les moyens primaires de sauvegarde sur les moyens secondaires de sauvegarde, après vérification d'un journal de données sauvegardées;
- si les moyens primaires de sauvegarde ne sont pas accessibles au terminal ou et si les moyens primaires de sauvegarde sont indisponibles pour opérer une sauvegarde supplémentaire :
   - transférer l'ensemble de données aux moyens secondaires de sauvegarde ; et,
   - transmettre à un module de synchronisation, une information indiquant qu'une réplication de l'ensemble de données reçu par les moyens secondaires de sauvegarde sur les moyens primaires de sauvegarde est nécessaire, après vérification d'un journal de données sauvegardées.

Le module de sauvegarde est par exemple une application, installée sur le terminal, adaptée pour accéder aux données stockées localement, et configurée de sorte à permettre la sauvegarde desdites données.

Les moyens de traitement peuvent en outre être configurés de sorte que des informations permettant d'identifier les données transmises aux moyens primaires et/ou aux moyens secondaires de sauvegarde soient consignées dans un journal de données sauvegardées. Les moyens de traitement peuvent encore être configurés de sorte à déclencher l'envoi de l'information qu'une réplication de l'ensemble de données reçu par les moyens secondaires de sauvegarde sur les moyens primaires de sauvegarde ou qu'une réplication de l'ensemble de données reçu par les moyens primaires de sauvegarde sur les moyens secondaires de sauvegarde est nécessaire, si l'ensemble des données transmis aux moyens primaires de sauvegarde ou aux moyens secondaire de sauvegarde ne comprend pas toutes les données identifiées dans le journal.

Selon ce quatrième aspect, les moyens primaires de sauvegarde peuvent être accessibles mais pas disponibles pour opérer une sauvegarde supplémentaire, car les moyens primaires de sauvegarde sont saturés et/ou en maintenance. Dès lors, afin d'éviter une perte de données liée à cette indisponibilité, les moyens secondaires de sauvegarde sont mis à disposition afin de permettre une continuité de sauvegarde.

Selon un cinquième aspect, l'invention se rapporte à un système comportant un réseau local, des moyens primaires de sauvegarde accessibles par l'intermédiaire du réseau local, des moyens de connections à un deuxième réseau par l'intermédiaire duquel des moyens secondaires de sauvegarde sont accessibles, au moins un terminal comportant un module de sauvegarde selon le second aspect, et un module de synchronisation comportant des moyens de traitement configuré de sorte à:
- recevoir l'information indiquant qu'une réplication de l'ensemble de données reçu par les moyens secondaires de sauvegarde sur les moyens primaires de sauvegarde est nécessaire;
- transmettre aux moyens primaires de sauvegarde pour réplication l'ensemble de données reçu par les moyens secondaires de sauvegarde.

Les moyens de traitement du module de synchronisation peuvent en particulier être en outre configurés de sorte à transmettre aux moyens secondaires de sauvegarde pour réplication l'ensemble de données reçu par les moyens primaires de sauvegarde sur les moyens primaires de sauvegarde.

Le deuxième réseau peut être un réseau permettant l'accès à Internet.

Selon un sixième aspect, l'invention se rapporte à un programme d'ordinateur comportant des instructions pour l'exécution des étapes du procédé selon le premier aspect, lorsque ledit programme est exécuté par un processeur.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable. En particulier, il est possible d'utiliser des langages de script, tels que notamment tcl, javascript, python, perl qui permettent une génération de code «à la demande» et ne nécessitent pas de surcharge significative pour leur génération ou leur modification.

Selon un septième aspect, l'invention se rapporte à un support d'enregistrement lisible par un ordinateur sur lequel est enregistré un programme d'ordinateur comprenant des instructions pour l'exécution des étapes du procédé selon le premier aspect.

Le support d'informations peut être n'importe quelle entité ou n'importe quel dispositif capable de stocker le programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette ou un disque dur. D'autre part, le support d'informations peut être un support transmissible tel qu'un signal électrique ou optique, qui peut être acheminé par un câble électrique ou optique, par radio ou par d'autres moyens. Le programme selon l'invention peut être en particulier téléchargé sur un réseau Internet ou Intranet. Alternativement, le support d'informations peut être un circuit intégré dans lequel le programme est incorporé, le circuit étant adapté pour exécuter ou pour être utilisé dans l'exécution du procédé en question.

D'autres particularités et avantages de la présente invention apparaîtront, dans la description ci-après de modes de réalisation, en référence aux dessins annexés, dans lesquels:
- la figure 1 est un schéma d'une infrastructure informatique selon un mode de réalisation;
- la figure 2 est un synoptique d'un procédé de sauvegarde de données pour terminaux itinérants, selon un mode de réalisation;
- la figure 3 est un synoptique d'un procédé de synchronisation des bases de données de sauvegarde primaire et secondaire, selon un mode de réalisation;
- la figure 4 est un schéma d'une infrastructure informatique selon un premier mode de réalisation.
- la figure 5 est un schéma d'une infrastructure informatique selon un deuxième mode de réalisation.
- la figure 6 est un schéma d'une infrastructure informatique selon un troisième mode de réalisation.
- la figure 7 est un schéma d'une infrastructure informatique selon un quatrième mode de réalisation.

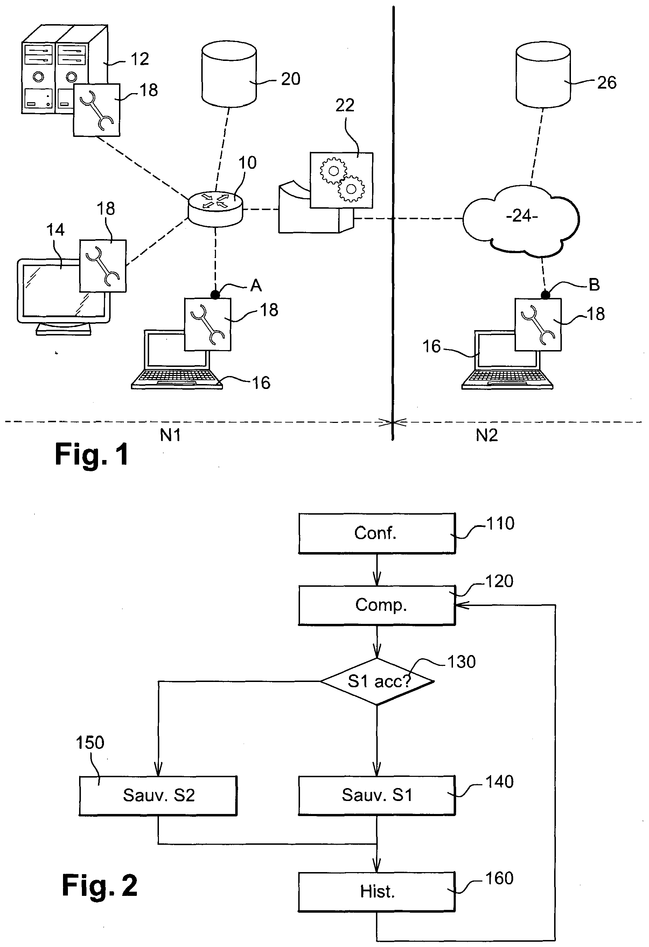

La figure 1 illustre schématiquement une infrastructure informatique comprenant un réseau local N1. Typiquement, le réseau local N1 est un réseau informatique, par exemple un réseau IP, utilisé dans une organisation, un site ou une entreprise pour interconnecter une pluralité de terminaux. Le réseau local N1 peut être déployé sur un même site. Alternativement, le réseau local N1 peut être constitué de sous-réseaux locaux déployés sur divers sites géographiquement distants (non représenté sur la figure 1). Dans l'exemple de la figure 1, des moyens d'interconnexion 10 permettent l'échange de données entre un serveur 12, un ordinateur 14, et un ordinateur portable 16. Les terminaux sont pourvus d'un module de sauvegarde 18. Les terminaux comprennent des moyens de traitement, typiquement des moyens de calcul comme des processeurs, ainsi que des moyens de stockage comme des disques durs et/ou de la mémoire de masse à semi-conducteurs réinscriptible de type «FLASH». Les terminaux stockent à l'aide des moyens de stockage les données selon une organisation propre. Chaque terminal comporte également des moyens de couplage aux moyens d'interconnexion 10. Certains terminaux peuvent comprendre des moyens d'affichage et d'interaction - par exemple un écran tactile, un ensemble composé d'un clavier, d'une souris et d'un écran - pour permettre à un utilisateur d'interagir avec les applications exécutées localement. Le module de sauvegarde 18 est par exemple une application, installée sur le terminal, adaptée pour accéder aux données stockées localement, et configurée de sorte à permettre la sauvegarde desdites données. Les moyens d'interconnexion 10 sont par exemple des routeurs, des commutateurs, des passerelles, des annuaires, des serveurs de nom, etc. Plus particulièrement, l'ordinateur portable 16 peut accéder au réseau N1 par l'intermédiaire d'un point d'accès A. Le point d'accès A peut être une connexion physique, comme un câble Ethernet couplé aux moyens d'interconnexion 10. Le point d'accès A peut aussi être une zone géographique dans laquelle l'ordinateur portable 16 peut accéder au réseau local N1, par exemple en utilisant une liaison sans fil, de type WiFi. Lorsque l'ordinateur portable 16 accède au réseau local N1 par l'intermédiaire du point d'accès A, le module de sauvegarde 18 de l'ordinateur portable 16 peut échanger des données avec des moyens primaires de sauvegarde 20. Un dispositif de synchronisation 22 est également couplé au réseau local N1, de sorte à pouvoir échanger des données avec les modules de sauvegardes 18 des terminaux. Le dispositif de synchronisation 22 est également couplé à un réseau secondaire N2, par exemple à Internet et/ou à une infrastructure réseau 24 fournissant des services de type informatique dématérialisée, plus généralement désignée par le terme anglo-saxon de «cloud computing».En particulier, des moyens secondaires de sauvegarde 26 sont accessibles par l'intermédiaire du réseau secondaire N2. L'ordinateur portable 16 peut accéder au réseau secondaire N2 par l'intermédiaire d'un point d'accès B. Le point d'accès B peut être une connections physique, comme un câble Ethernet couplé à un point d'accès à Internet et/ou à l'infrastructure réseau 24. Le point d'accès B peut aussi être une zone géographique dans laquelle l'ordinateur portable 16 peut accéder au réseau secondaire N2, par exemple en utilisant une liaison sans fil, de type WiFi. Lorsque l'ordinateur portable 16 accède au réseau secondaire N2 par l'intermédiaire du point d'accès B, le module de sauvegarde 18 de l'ordinateur portable 16 peut échanger des données avec les moyens secondaires de sauvegarde 26. En revanche, le module de sauvegarde 18 de l'ordinateur portable 16 ne peut échanger directement, à partir du point d'accès B, des données avec les moyens primaires de sauvegarde 20, sans mettre en oeuvre un accès spécial, par exemple un réseau privé virtuel.

La figure 2 illustre, par un synoptique, un procédé de sauvegarde de données pour terminaux itinérants, selon un mode de réalisation. Le procédé est notamment adapté à être mis en oeuvre par le module de sauvegarde 18de chaque terminal itinérant. Dans l'exemple qui suit, le procédé est mis en oeuvre par le module de sauvegarde 18 de l'ordinateur portable 16.

Au cours d'une étape optionnelle de configuration 110, les emplacements des données, présentes sur l'ordinateur portable 16, qui doivent être sauvegardées, sont identifiés puis enregistrés dans une liste SRC. Par exemple, une interface d'administration peut être proposée à un utilisateur pour lui permettre de choisir, dans l'arborescence de stockage des fichiers de l'ordinateur portable 16, les répertoires dont le contenu doit être sauvegardé. L'utilisateur peut utiliser cette interface utilisateur de sorte à désigner les répertoires «Mes Documents», comprenant initialement un fichier A.doc, et «Mes images», comprenant initialement un fichier «IMG01.jpg». Aussi, le contenu de ces répertoires sera donc par la suite sauvegardé. Au cours de cette étape, il est possible de définir d'autres critères, notamment des règles permettant de sélectionner selon certaines caractéristiques, les données, les fichiers et/ou les répertoires à sauvegarder. Un critère peut être un type de données. Une règle peut consister à ne sauvegarder que les fichiers correspondant à des images ou encore seulement les répertoires comprenant au moins un fichier.

Au cours d'une étape de comparaison 120, les données à sauvegarder, présentes sur l'ordinateur portable 16, sont identifiées. Pour cela, le module de sauvegarde 18 consulte la liste SRC des emplacements comportant des données à sauvegarder et détermine leur contenu. Une liste SRCDATA est alors construite. Si un nouveau fichier «B.doc» a été créé dans le répertoire «Mes Documents», la liste SRCDATA comprendra les fichiers «A.doc» et «B.doc» du répertoire «Mes Documents» ainsi que le fichier «IMG01.jpg» du répertoire «Mes images». Le module de sauvegarde 18 maintient un journal JRL de fichiers sauvegardés. Le journal JRL comporte les informations nécessaires pour identifier les données préalablement sauvegardées, pour déterminer quand les données ont été sauvegardées pour la dernière fois, et pour permettre l'identification des sous-ensembles de données modifiés depuis la dernière sauvegarde. Le journal JRL peut en particulier être une base de données comportant les champs suivants: chemin, Complet/Delta, Date. Le champ chemin correspond au chemin d'accès au fichier sur l'ordinateur portable 16. Le champ Complet/Delta comporte l'information si le fichier a été sauvegardé complètement ou si seuls des sous-ensembles de données ont été sauvegardés. Le champ Date correspond à la dernière modification du fichier sauvegardée. À titre d'exemple, si le fichier «A.doc» n'a jamais été sauvegardé, le journal ne comportera aucune entrée pour le fichier «A.doc». Si le fichier «IMG01.jpg» a été sauvegardé le 14.09.2013 pour la première fois, le journal comportera l'entrée suivante pour le fichier «IMG01.doc»: «/Mes images/IMG01.jpg», COMPLET, 14.09.2013.Si des modifications apportées le 15.09.2013 au fichier «B.doc» ont été sauvegardées après une première sauvegarde complète dudit fichier, le journal comportera l'entrée suivante pour le fichier «B.doc»: «/Mes documents/B.jpg», DELTA, 15.09.2013. Pour identifier les données à sauvegarder, présentes sur l'ordinateur portable 16, le module de sauvegarde va, pour chaque fichier de la liste SRCDATA, chercher si une entrée correspondant à ce fichier est présente dans le journal JRL, par exemple en comparant le chemin d'accès audit fichier et le champ chemin du journal JRL. Si aucune entrée n'est trouvée, alors le fichier correspondant est identifié comme fichier à sauvegarder. Si une entrée est trouvée dans le journal JRL, alors le module de sauvegarde 18 compare la date de la dernière modification dudit fichier sur l'ordinateur portable avec le champ Date de l'entrée correspondante. Si le fichier a été modifié après la date enregistrée dans le champ Date, alors le sous-ensemble du fichier modifié entre ces deux dates est identifié comme sous-ensemble modifié du fichier à sauvegarder.

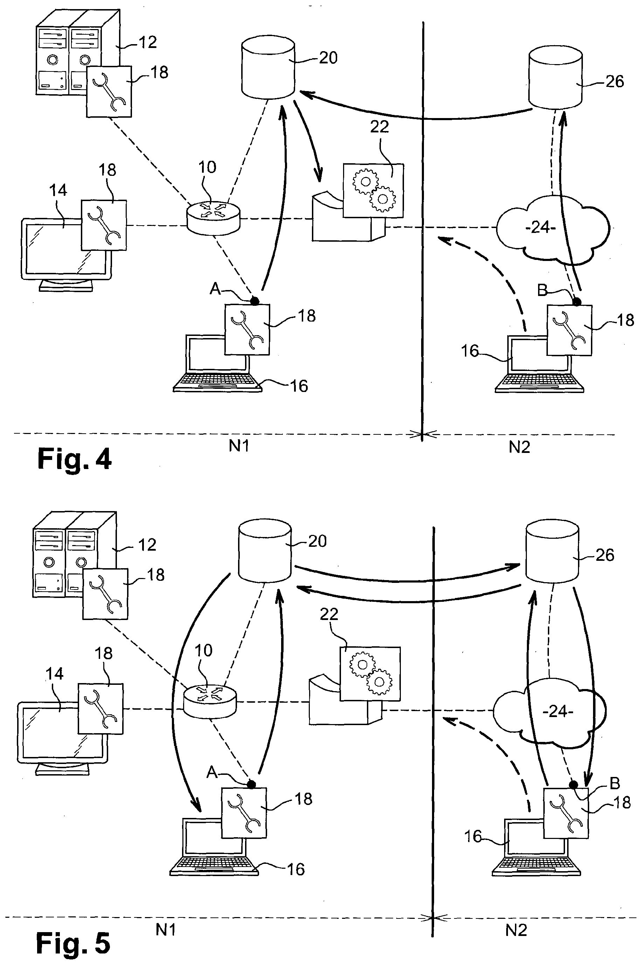

La figure 4 illustre un premier mode de réalisation, dans lequel au cours d'une étape 130 de choix des moyens de sauvegardes, on vérifie si les moyens primaires de sauvegarde 20 sont accessibles. Par exemple, le module de sauvegarde 18 peut être programmé pour vérifier si l'ordinateur portable 16 est connecté au réseau local N1 et/ou s'assurer que les moyens primaires de sauvegardes 20 sont accessibles. Une requête peut être émise pour s'assurer que les moyens primaires de sauvegardes 20 sont accessibles, par exemple en envoyant à l'adresse sur le réseau local N1 des moyens primaires de sauvegardes un message, et en attendant une réponse de ces derniers.

Si les moyens primaires de sauvegarde 20 sont accessibles, alors les fichiers et les sous-ensembles de fichiers modifiés identifiés au cours de l'étape 120 comme fichiers et sous-ensemble à sauvegarder, sont transmis, au cours d'une étape 140, , aux moyens primaires de sauvegarde 20. Ce scénario se produit typiquement lorsque l'ordinateur portable 16 est couplé au réseau local N1, par l'intermédiaire du point d'accès A. La transmission des données à sauvegarder peut être assurée par le module de sauvegarde 18.

Si les moyens primaires de sauvegarde 20 ne sont pas accessibles, alors les fichiers et les sous-ensembles de fichiers modifiés identifiés au cours de l'étape 120 comme fichiers et sous-ensemble à sauvegarder, sont transmis, au cours d'une étape 150, aux moyens secondaires de sauvegarde 26. Ce scénario se produit typiquement lorsque l'ordinateur portable 16 est couplé au réseau secondaire N2, par l'intermédiaire du point d'accès B. La transmission des données à sauvegarder peut être assurée par le module de sauvegarde 18.

Dans une étape 160 de mise à jour du journal JRL de fichiers sauvegardés, les informations nécessaires pour identifier les données préalablement sauvegardées, pour déterminer quand les données ont été sauvegardées pour la dernière fois, et/ou pour permettre l'identification des sous-ensembles de données modifiés depuis la dernière sauvegarde sont mise à jour dans le journal JRL, en fonction des données transmises aux moyens primaires ou secondaires de sauvegarde, au cours de l'étape 140 ou 150. Le module de sauvegarde 18 peut prendre en charge cette mise à jour. À titre d'exemple, si, au cours de l'étape 140 ou de l'étape 150, le fichier «A.doc» a été sauvegardé pour la première fois, le 17.09.2013, le journal sera mis à jour en créant l'entrée suivante pour le fichier «A.doc»: «/Mes documents/A.doc», COMPLET, 17.09.2013. Si des modifications ont été apportées le 16.09.2013 au fichier «IMG01.jpg», et que le fichier «IMG01.jpg» a été sauvegardé au cours de l'étape 140 ou de l'étape 150, le journal sera mis à jour en modifiant l'entrée correspondante au fichier «IMG01.jpg»: «/Mes images/IMG01.jpg», DELTA, 16.09.2013.

Toujours selon le premier mode de réalisation, les fichiers et les sous-ensembles de fichiers modifiés identifiés au cours de l'étape 120 comme fichiers et sous-ensemble à sauvegarder et transmis, au cours d'une étape 150, aux moyens secondaires de sauvegarde 26 sont transférés des moyens secondaires de sauvegarde 26 vers les moyens primaires de sauvegarde 20 afin que l'ensemble des fichiers et des sous-ensembles de fichiers modifiés soit localisé sur les moyens primaires de sauvegarde 20.

Selon le premier mode de réalisation, il est à noter que, si l'ordinateur portable 16 est connecté depuis le point d'accès A pendant une période au cours de laquelle les étapes 120, 130, 140 et 160 sont exécutées au moins une fois, et pour une autre période au cours de laquelle les étapes 120, 130, 150 et 160 sont exécutées au moins une fois, depuis le point d'accès B, il est possible qu'une partie des données sauvegardées soit présente seulement sur les moyens secondaires de sauvegarde 26 et absente des moyens primaires de sauvegarde.

La figure 5 représente un deuxième mode de réalisation, dans lequel les étapes 110 à 160 sont réalisées de façon similaire au premier mode de réalisation.

Toutefois, dans ce second mode de réalisation, les fichiers et les sous-ensembles de fichiers modifiés identifiés au cours de l'étape 120 comme fichiers et sous-ensemble à sauvegarder et transmis, au cours d'une étape 140 aux moyens primaires de sauvegarde 20, ou au cours d'une étape 150 aux moyens secondaires de sauvegarde 26 sont transférés respectivement des moyens primaires de sauvegarde 20 vers les moyens secondaire de sauvegarde 26 ou des moyens secondaires de sauvegarde 26 vers les moyens primaires de sauvegarde 20 afin que l'ensemble des fichiers et des sous-ensembles de fichiers modifiés soit localisé à la fois sur les moyens primaires de sauvegarde 20 et à la fois sur les moyens secondaire de sauvegarde 26.

Grâce à cette disposition, les fichiers et les sous-ensembles de fichiers sauvegardés et transmis, au cours d'une étape 140, par l'intermédiaire du dispositif de synchronisation 22, aux moyens primaires de sauvegarde 20 ou aux moyens de sauvegarde secondaire 26 pourront être restitués à l'ordinateur portable 16, lorsque ce dernier est couplé au réseau primaire N1 ou au réseau N2..

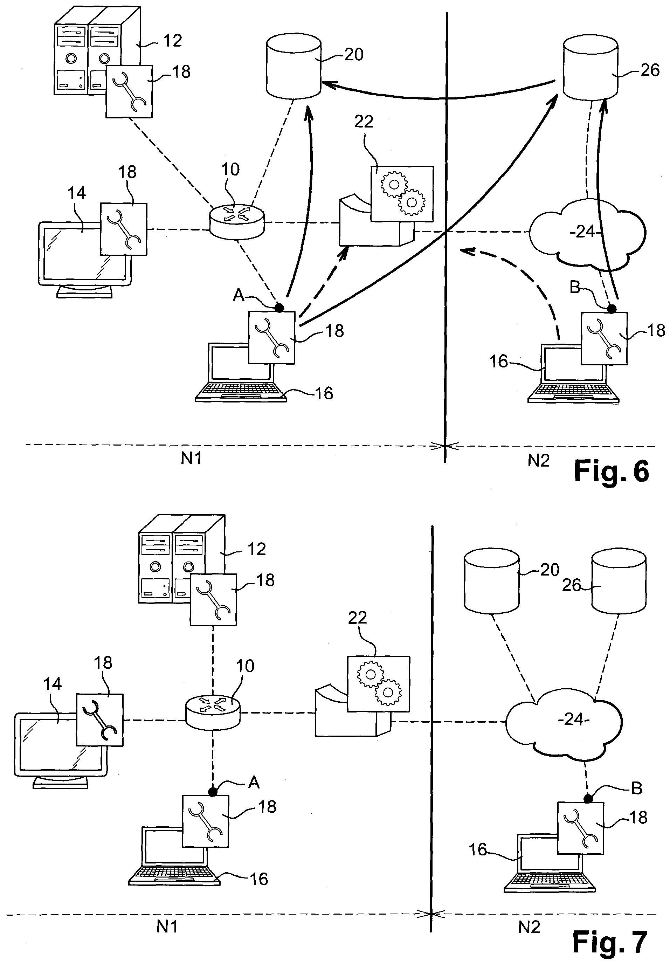

La figure 6 illustre un troisième mode de réalisation permettant de couvrir les trois cas de figure suivants :
- l'ordinateur portable 16 est couplé au réseau local N1, par l'intermédiaire du point d'accès A. Les moyens primaires de sauvegarde 20 sont accessibles et/ou les moyens primaires de sauvegarde 20 sont disponibles pour réaliser une sauvegarde additionnelle ;
- l'ordinateur portable 16 est couplé au réseau local N1, par l'intermédiaire du point d'accès A. Les moyens primaires de sauvegarde 20 sont accessibles mais ils ne sont pas disponibles pour réaliser une sauvegarde additionnelle ;
- l'ordinateur portable 16 est couplé au réseau local N1, mais les moyens primaires de sauvegarde 20 ne sont pas accessibles ou l'ordinateur portable 16 est couplé au réseau local N2, par l'intermédiaire du point d'accès B.

Dans cette ce troisième mode de réalisation, les moyens primaires de sauvegarde peuvent être accessibles mais pas disponibles pour opérer une sauvegarde supplémentaire, car les moyens primaires de sauvegarde sont saturés et/ou en maintenance, par exemple. Dès lors, afin d'éviter une perte de données liée à cette indisponibilité, les moyens secondaires de sauvegarde sont mis à disposition afin de permettre une continuité de sauvegarde.

Dans cette ce troisième mode de réalisation, au cours d'une étape 130 de choix des moyens de sauvegardes, on vérifie si les moyens primaires de sauvegarde 20 sont accessibles et/ou si les moyens primaires de sauvegarde 20 sont disponibles pour réaliser une sauvegarde additionnelle. Par exemple, le module de sauvegarde 18 peut être programmé pour vérifier si l'ordinateur portable 18 est connecté au réseau local N1 et/ou s'assurer que les moyens primaires de sauvegardes 20 sont accessibles et disponibles pour une sauvegarde additionnelle. Une requête peut être émise pour s'assurer que les moyens primaires de sauvegardes 20 sont disponibles, par exemple en envoyant à l'adresse sur le réseau local N1 des moyens primaires de sauvegardes un message, et en attendant une réponse de ces derniers.

Si les moyens primaires de sauvegarde 20 sont accessibles et disponibles pour une sauvegarde additionnelle, alors les fichiers et les sous-ensembles de fichiers modifiés identifiés au cours de l'étape 120 comme fichiers et sous-ensemble à sauvegarder, sont transmis, au cours d'une étape 140, par l'intermédiaire du dispositif de synchronisation 22, aux moyens primaires de sauvegarde 20. Ce scénario se produit typiquement lorsque l'ordinateur portable 16 est couplé au réseau local N1, par l'intermédiaire du point d'accès A. La transmission des données à sauvegarder peut être assurée par le module de sauvegarde 18.

Si les moyens primaires de sauvegarde 20 sont accessibles mais qu'ils ne sont pas disponibles pour une sauvegarde additionnelle ou si les moyens primaires de sauvegarde 20 ne sont pas accessibles, alors les fichiers et les sous-ensembles de fichiers modifiés identifiés au cours de l'étape 120 comme fichiers et sous-ensemble à sauvegarder, sont transmis, au cours d'une étape 150, aux moyens secondaires de sauvegarde 26 à partir du réseau primaire N1. Ce scénario se produit typiquement lorsque l'ordinateur portable 16 est couplé au réseau primaire N1, par l'intermédiaire du point d'accès A, et que les moyens primaires de sauvegarde 20 ne sont pas accessibles en écriture et/ou que les moyens primaires de sauvegarde 20 ne sont pas disponibles, par exemple car les moyens primaires de sauvegarde n'ont plus d'espace de stockage disponible, ou lorsque l'ordinateur portable 16 est couplé au réseau local N2, par l'intermédiaire du point d'accès B.

Ces dispositions permettent d'utiliser temporairement les moyens secondaires de sauvegarde en attendant que les moyens primaires soient à nouveau disponible, suite à un ajout de capacité mémoire par exemple, tout en préservant la disponibilité du service de sauvegarde.

Une étape 160 de mise à jour du journal JRL est ensuite réalisées comme dans le premier mode de réalisation présenté précédemment.

Toujours selon le troisième mode de réalisation, les fichiers et les sous-ensembles de fichiers modifiés identifiés au cours de l'étape 120 comme fichiers et sous-ensemble à sauvegarder et transmis, au cours d'une étape 150 aux moyens secondaires de sauvegarde 26 sont transférés des moyens secondaires de sauvegarde 26 vers les moyens primaires de sauvegarde 20 afin que l'ensemble des fichiers et des sous-ensembles de fichiers modifiés soit localisé sur les moyens secondaire de sauvegarde 26.

Dans les différents modes de réalisation, les étapes 120, 130, 140, 150 et 160 sont répétées périodiquement, pour permettre la sauvegarde régulière des données de l'ordinateur portable 16. Par exemple, l'exécution de ces étapes pourra être déclenchée à intervalles programmés, par exemple toutes les heures, tous les jours ou toutes les semaines.

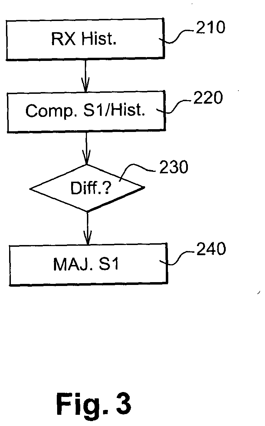

La figure 3 est un synoptique d'un procédé de synchronisation des bases de données de sauvegarde primaire et secondaire, selon un mode de réalisation. Le procédé est notamment adapté à être mis en oeuvre par le dispositif de synchronisation 22. Dans l'exemple qui suit, le procédé est mis en oeuvre par le dispositif de synchronisation 22 pour synchroniser les données sauvegardées par le module de sauvegarde 18 de l'ordinateur portable 16 sur les moyens primaires 20 et secondaires 26 de sauvegarde. Le procédé de synchronisation peut être déclenché périodiquement. Le procédé de synchronisation peut être déclenché automatiquement lorsqu'un terminal demande à sauvegarder des données sur les moyens primaires de sauvegarde 20, et préalablement à la sauvegarde desdites données.

Au cours d'une étape 210, le journal JRL des fichiers sauvegardés par le module de sauvegarde 18 de l'ordinateur portable 16 est obtenu ou reconstitué. Le journal JRL peut être transmis par le module de sauvegarde 18 au cours de l'étape 130, 140, 150 ou 160. Le contenu du journal JRL peut également être reconstitué à partir des données transitant par l'intermédiaire du dispositif de synchronisation 22, lorsque le module de sauvegarde transmet les données à sauvegarder aux moyens primaires ou secondaires de stockage.

Les données du journal JRL et les données sauvegardées par les moyens primaires de sauvegarde 20 relatives à l'ordinateur portable 16 sont comparées au cours d'une étape 220. Plus particulièrement, au cours de cette étape le dispositif de synchronisation 22 vérifie si tous les fichiers listés dans le journal JRL ainsi que les sous-ensembles correspondant aux dernières modifications des fichiers listés dans le journal, ont bien été soumis aux moyens primaires de sauvegarde 20.

Aussi, si les informations correspondantes aux données sauvegardées dans les moyens primaires de sauvegarde 20 relative à l'ordinateur portable diffèrent 230 de celles comprises dans le journal JRL, alors au cours d'une étape 240 de réplication, les données sauvegardées sur les moyens primaires de sauvegarde 20 sont mises à jour en conséquence. Plus particulièrement, les données sauvegardées dans les moyens secondaires de sauvegarde 26 sont répliquées sur les moyens primaires de sauvegarde. À titre d'exemple, si le fichier fichiers «A.doc» est listé dans le journal JRL, mais absent des moyens primaires de sauvegarde 20, le fichier «A.doc» sera obtenu des moyens secondaires de sauvegarde et enregistrer dans les moyens primaires de sauvegarde. En outre, s'il est indiqué dans le journal JRL une date de modification au 17.09.2013 pour le fichier «IMG01.jpg», mais que les moyens de sauvegarde comportent le fichier «IMG01.jpg» tel que modifié le 16.09.2013, le sous-ensemble correspondant aux modifications introduites entre le 16.09.2013 et le 17.09.2013 sera obtenu des moyens secondaires de sauvegarde et enregistrer dans les moyens primaires de sauvegarde.

Optionnellement, le dispositif de synchronisation 22 peut être programmé de sorte à maintenir les données sauvegardées par les moyens secondaires de sauvegarde synchronisée avec les données sauvegardées par les moyens primaires de sauvegarde. Par exemple, lorsque des données sont transmises aux moyens primaires de sauvegarde, le dispositif de synchronisation 22 peut être programmé pour transférer lesdites données également aux moyens secondaires de sauvegarde de sorte que ce dernier puisse les sauvegarder.

La figure 7 illustre schématiquement d'une infrastructure informatique selon un cinquième mode de réalisation. Les moyens primaires de sauvegarde 20 sont accessibles par l'intermédiaire du réseau secondaire N2. Les demandes d'accès aux moyens primaires de sauvegarde 20 émise par les terminaux sont alors interceptées par le dispositif de synchronisation 22 et redirigé vers les moyens primaires de sauvegarde 20 par l'intermédiaire du réseau secondaire N2. Par exemple, lorsque l'ordinateur portable émet une requête pour s'assurer qu'il peut accéder aux moyens primaires de sauvegarde 20 depuis le point d'accès A, le dispositif de synchronisation 22 intercepte cette requête, la transmet éventuellement aux moyens primaires de sauvegarde de traitement, et renvoie la réponse adéquate à l'ordinateur portable 16. L'ordinateur portable 16 peut donc agir comme si les moyens primaires de sauvegarde étaient directement couplés au réseau local N1.

## Revendications

1. Procédé de sauvegarde de données stockées sur un terminal (12, 14, 16), le terminal comportant des moyens de connections à un réseau local (N1) par l'intermédiaire duquel des moyens primaires de sauvegarde sont accessibles, le terminal comportant en outre des moyens de connections à un deuxième réseau (N2) par l'intermédiaire duquel des moyens secondaires de sauvegarde (26) sont accessibles, **caractérisé en ce qu'**il comporte les étapes suivantes:
• détermination (120) d'un ensemble de données à sauvegarder parmi les données stockées sur le terminal;
• si le terminal est connecté au réseau local, transfert (140) de l'ensemble de données aux moyens primaires de sauvegarde;
• si le terminal est connecté au deuxième réseau,
• transfert (150) de l'ensemble de données aux moyens secondaires de sauvegarde; et,
• réplication (240) de l'ensemble de données reçu par les moyens secondaires de sauvegarde sur les moyens primaires de sauvegarde.

2. Procédé de sauvegarde de données stockées sur un terminal (12, 14, 16), le terminal comportant des moyens de connections à un réseau local (N1) par l'intermédiaire duquel des moyens primaires de sauvegarde sont accessibles, le terminal comportant en outre des moyens de connections à un deuxième réseau (N2) par l'intermédiaire duquel des moyens secondaires de sauvegarde (26) sont accessibles, **caractérisé en ce qu'**il comporte les étapes suivantes:
• détermination (120) d'un ensemble de données à sauvegarder parmi les données stockées sur le terminal;
• si le terminal est connecté au réseau local, et si les moyens primaires de sauvegarde sont disponibles pour opérer une sauvegarde supplémentaire, transfert (140) de l'ensemble de données aux moyens primaires de sauvegarde;
• si le terminal est connecté au réseau local, et si les moyens primaires de sauvegarde sont indisponibles pour opérer une sauvegarde supplémentaire,
• transfert (140) de l'ensemble de données aux moyens secondaires de sauvegarde;
• réplication (240) de l'ensemble de données reçu par les moyens secondaires de sauvegarde sur les moyens primaires de sauvegarde.

3. Procédé selon la revendication 2, comprenant en outre les étapes suivantes :
• si le terminal est connecté au deuxième réseau :
• transfert (150) de l'ensemble de données aux moyens secondaires de sauvegarde; et,
• réplication (240) de l'ensemble de données reçu par les moyens secondaires de sauvegarde sur les moyens primaires de sauvegarde.

4. Procédé selon l'une des revendications précédentes, dans lequel, suite au transfert (140) de l'ensemble de données aux moyens primaires de sauvegarde; on réalise une réplication (240) de l'ensemble de données reçu par les moyens primaires de sauvegarde sur les moyens secondaires de sauvegarde.

5. Procédé selon l'une des revendications précédentes, dans lequel, des informations permettant d'identifier les données transmises aux moyens primaires et aux moyens secondaires de sauvegarde (20, 26) sont consignées dans un journal de données sauvegardées, au cours d'une étape (160) de mise à jour.

6. Procédé selon l'une des revendications précédentes, dans lequel, des informations permettant d'identifier la date de la dernière modification apportée aux données transmises aux moyens primaires et aux moyens secondaires de sauvegarde sont consignées dans un journal de données sauvegardées, au cours d'une étape (160) de mise à jour.

7. Procédé selon l'une des revendications précédentes, dans lequel l'ensemble de données à sauvegarder est déterminé en identifiant parmi les données stockées sur le terminal celles pour lesquelles aucune information n'est comprise dans le journal.

8. Procédé selon l'une des revendications précédentes, dans lequel l'étape (240) de réplication est déclenchée si l'ensemble des données transmis à au moins un moyen de sauvegarde ne comprend pas toutes les données identifiées dans le journal.

9. Module de sauvegarde de données (18) adapté à être embarqué sur un terminal (12, 14, 16) comportant des moyens de connections à un réseau local (N1) par l'intermédiaire duquel des moyens primaires de sauvegarde sont accessibles, et des moyens de connections à un deuxième réseau (N2) par l'intermédiaire duquel des moyens secondaires de sauvegarde (26) sont accessibles, **caractérisé en ce qu'**il comporte des moyens de traitement configuré de sorte à:
• déterminer un ensemble de données à sauvegarder parmi les données stockées sur le terminal;
• si le terminal est connecté au réseau local, transférer l'ensemble de données aux moyens primaires de sauvegarde;
• si le terminal est connecté au deuxième réseau,
• transférer l'ensemble de données aux moyens secondaires de sauvegarde; et,
• transmettre, à un module de synchronisation (22), une information indiquant qu'une réplication de l'ensemble de données reçu par les moyens secondaires de sauvegarde sur les moyens primaires de sauvegarde est nécessaire.

10. Module de sauvegarde de données (18) adapté à être embarqué sur un terminal (12, 14, 16) comportant des moyens de connections à un réseau local (N1) par l'intermédiaire duquel des moyens primaires de sauvegarde sont accessibles, et des moyens de connections à un deuxième réseau (N2) par l'intermédiaire duquel des moyens secondaires de sauvegarde (26) sont accessibles, **caractérisé en ce qu'**il comporte des moyens de traitement configuré de sorte à:
• déterminer un ensemble de données à sauvegarder parmi les données stockées sur le terminal;
• si les moyens primaires de sauvegarde sont accessibles au terminal et disponibles pour opérer une sauvegarde supplémentaire, transférer l'ensemble de données aux moyens primaires de sauvegarde;
• si les moyens primaires de sauvegarde ne sont pas accessibles au terminal ou si les moyens primaires de sauvegarde sont indisponibles pour opérer une sauvegarde supplémentaire :
• transférer l'ensemble de données aux moyens secondaires de sauvegarde ; et,
• transmettre à un module de synchronisation, une information indiquant qu'une réplication de l'ensemble de données reçu par les moyens secondaires de sauvegarde sur les moyens primaires de sauvegarde est nécessaire, après vérification d'un journal de données sauvegardées.

11. Module selon la revendication 6, dans lequel les moyens de traitement sont en outre configurés de sorte à ce que des informations permettant d'identifier les données transmises aux moyens de sauvegarde soient consignées dans le journal de données sauvegardées.

12. Module selon la revendication 6 ou 7, dans lequel les moyens de traitement sont en outre configurés de sorte à déclencher l'envoi de l'information qu'une réplication de l'ensemble de données reçu par les moyens secondaires de sauvegarde sur les moyens primaires de sauvegarde est nécessaire, si l'ensemble des données transmis aux moyens primaires de sauvegarde ne comprend pas toutes les données identifiées dans le journal.

13. Module selon l'une quelconque des revendications 7 à 8, dans lequel le deuxième réseau (N2) est un réseau permettant l'accès à Internet.

14. Système comportant un réseau local (N1), des moyens primaires de sauvegarde (20) accessibles par l'intermédiaire du réseau local (N1), des moyens de connections à un deuxième réseau (N2) par l'intermédiaire duquel des moyens secondaires de sauvegarde (26) sont accessibles, au moins un terminal comportant un module de sauvegarde selon l'une quelconque des revendications 6 à 9, un module de synchronisation (22) comportant des moyens de traitement configuré de sorte à:
• recevoir l'information indiquant qu'une réplication de l'ensemble de données reçu est nécessaire sur l'ensemble des moyens de sauvegarde et sur le dispositif de synchronisation;
• transmettre aux moyens primaires de sauvegarde pour réplication l'ensemble de données reçu par les moyens secondaires de sauvegarde.

15. Système selon la revendication 10, dans lequel les moyens de traitement du module de synchronisation (22) sont en outre configurés de sorte à transmettre aux moyens secondaires de sauvegarde pour réplication l'ensemble de données reçu par les moyens primaires de sauvegarde sur les moyens secondaires de sauvegarde.

16. Système selon la revendication 10 ou 11, dans lequel le deuxième réseau (N2) est un réseau permettant l'accès à Internet.

17. Programme d'ordinateur comportant des instructions pour l'exécution des étapes du procédé selon l'une quelconque des revendications 1 à 6, lorsque ledit programme est exécuté par un processeur.

18. Support d'enregistrement lisible par un ordinateur sur lequel est enregistré un programme d'ordinateur comprenant des instructions pour l'exécution des étapes du procédé selon l'une quelconque des revendications 1 à 6.

## Patentansprüche

1. Verfahren zur Sicherung von auf einem Endgerät (12, 14, 16) gespeicherten Daten, wobei das Endgerät Verbindungsmittel mit einem lokalen Netz (N1) aufweist, über das primäre Sicherungsmittel erreichbar sind, wobei das Endgerät ferner Verbindungsmittel mit einem zweiten Netz (N2) aufweist, über das sekundäre Sicherungsmittel (26) erreichbar sind, **dadurch gekennzeichnet, dass** es die folgenden Schritte umfasst:
- Bestimmen (120) einer Gruppe von zu sichernden Daten von den auf dem Endgerät gespeicherten Daten;
- wenn das Endgerät mit dem lokalen Netz verbunden ist, Übertragen (140) der Gruppe von Daten an die primären Sicherungsmittel;
- wenn das Endgerät mit dem zweiten Netz verbunden ist,
- Übertragen (150) der Gruppe von Daten an die sekundären Sicherungsmittel; und
- Replizieren (240) der von den sekundären Sicherungsmitteln empfangenen Gruppe von Daten auf den primären Sicherungsmitteln.

2. Verfahren zur Sicherung von auf einem Endgerät (12, 14, 16) gespeicherten Daten, wobei das Endgerät Verbindungsmittel mit einem lokalen Netz (N1) aufweist, über das primäre Sicherungsmittel erreichbar sind, wobei das Endgerät ferner Verbindungsmittel mit einem zweiten Netz (N2) aufweist, über das sekundäre Sicherungsmittel (26) erreichbar sind, **dadurch gekennzeichnet, dass** es die folgenden Schritte umfasst:
- Bestimmen (120) einer Gruppe von zu sichernden Daten von den auf dem Endgerät gespeicherten Daten;
- wenn das Endgerät mit dem lokalen Netz verbunden ist und wenn die primären Sicherungsmittel verfügbar sind, um eine zusätzliche Sicherung durchzuführen, Übertragen (140) der Gruppe von Daten an die primären Sicherungsmittel;
- wenn das Endgerät mit dem lokalen Netz verbunden ist und wenn die primären Sicherungsmittel nicht verfügbar sind, um eine zusätzliche Sicherung durchzuführen,
- Übertragen (150) der Gruppe von Daten an die sekundären Sicherungsmittel;
- Replizieren (240) der von den sekundären Sicherungsmitteln empfangenen Gruppe von Daten auf den primären Sicherungsmitteln.

3. Verfahren nach Anspruch 2, umfassend ferner die folgenden Schritte:
- wenn das Endgerät mit dem zweiten Netz verbunden ist:
- Übertragen (150) der Gruppe von Daten an die sekundären Sicherungsmittel; und
- Replizieren (240) der von den sekundären Sicherungsmitteln empfangenen Gruppe von Daten auf den primären Sicherungsmitteln.

4. Verfahren nach einem der vorangehenden Ansprüche, wobei nach dem Übertragen (140) der Gruppe von Daten an die primären Sicherungsmittel; eine Replikation (240) der von den primären Sicherungsmitteln empfangenen Gruppe von Daten auf den sekundären Sicherungsmitteln durchgeführt wird.

5. Verfahren nach einem der vorangehenden Ansprüche, wobei während eines Aktualisierungsschritts (160) Informationen, die erlauben, die an die primären und sekundären Sicherungsmittel (20, 26) übertragenen Daten zu identifizieren, in einem Protokoll gesicherter Daten eingetragen sind.

6. Verfahren nach einem der vorangehenden Ansprüche, wobei während eines Aktualisierungsschritts (160) Informationen, die erlauben, den Zeitpunkt der letzten vorgenommenen Änderung der an die primären und sekundären Sicherungsmittel übertragenen Daten zu identifizieren, in einem Protokoll gesicherter Daten eingetragen sind.

7. Verfahren nach einem der vorangehenden Ansprüche, wobei die Gruppe von zu sichernden Daten durch Identifizieren von den auf dem Endgerät gespeicherten Daten derjenigen bestimmt wird, für die keine Information in dem Protokoll vorhanden ist.

8. Verfahren nach einem der vorangehenden Ansprüche, wobei der Replikationsschritt (240) ausgelöst wird, wenn die an mindestens ein Sicherungsmittel übertragene Gruppe von Daten nicht alle in dem Protokoll identifizierten Daten umfasst.

9. Modul zur Sicherung von Daten (18), das für den Einbau in einem Endgerät (12, 14, 16) geeignet ist, aufweisend Verbindungsmittel mit einem lokalen Netz (N1), über das primäre Sicherungsmittel erreichbar sind, und Verbindungsmittel mit einem zweiten Netz (N2), über das sekundäre Sicherungsmittel (26) erreichbar sind, **dadurch gekennzeichnet, dass** es Verarbeitungsmittel aufweist, die derart konfiguriert sind, um:
- eine Gruppe von zu sichernden Daten von den auf dem Endgerät gespeicherten Daten zu bestimmen;
- wenn das Endgerät mit dem lokalen Netz verbunden ist, die Gruppe von Daten an die primären Sicherungsmittel zu übertragen;
- wenn das Endgerät mit dem zweiten Netz verbunden ist,
- die Gruppe von Daten an die sekundären Sicherungsmittel zu übertragen; und
- an ein Synchronisierungsmodul (22) eine Information zu übertragen, die anzeigt, dass eine Replikation der von den sekundären Sicherungsmitteln empfangenen Gruppe von Daten auf den primären Sicherungsmitteln notwendig ist.

10. Modul zur Sicherung von Daten (18), das für den Einbau in einem Endgerät (12, 14, 16) geeignet ist, aufweisend Verbindungsmittel mit einem lokalen Netz (N1), über das primäre Sicherungsmittel erreichbar sind, und Verbindungsmittel mit einem zweiten Netz (N2), über das sekundäre Sicherungsmittel (26) erreichbar sind, **dadurch gekennzeichnet, dass** es Verarbeitungsmittel aufweist, die derart konfiguriert sind, um:
- eine Gruppe von zu sichernden Daten von den auf dem Endgerät gespeicherten Daten zu bestimmen;
- wenn die primären Sicherungsmittel für das Endgerät erreichbar und verfügbar sind, um eine zusätzliche Sicherung durchzuführen, die Gruppe von Daten an die primären Sicherungsmittel zu übertragen;
- wenn die primären Sicherungsmittel für das Endgerät nicht erreichbar sind oder wenn die primären Sicherungsmittel nicht verfügbar sind, um eine zusätzliche Sicherung durchzuführen:
- die Gruppe von Daten an die sekundären Sicherungsmittel zu übertragen; und
- nach Überprüfung eines Protokolls gesicherter Daten an ein Synchronisierungsmodul eine Information zu übertragen, die anzeigt, dass eine Replikation der von den sekundären Sicherungsmitteln empfangenen Gruppe von Daten auf den primären Sicherungsmitteln notwendig ist.

11. Modul nach Anspruch 6, wobei die Verarbeitungsmittel ferner derart konfiguriert sind, dass Informationen, die erlauben, die an die Speichermittel übertragenen Daten zu identifizieren, im Protokoll gesicherter Daten eingetragen sind.

12. Modul nach Anspruch 6 oder 7, wobei die Verarbeitungsmittel ferner derart konfiguriert sind, dass der Versand der Information, dass eine Replikation der von den sekundären Sicherungsmitteln empfangenen Gruppe von Daten auf den primären Sicherungsmitteln notwendig ist, ausgelöst wird, wenn die Gruppe der an die primären Sicherungsmittel übertragenen Daten nicht alle im Protokoll identifizierten Daten umfasst.

13. Modul nach einem der Ansprüche 7 bis 8, wobei das zweite Netz (N2) ein Netz ist, das den Zugriff auf das Internet erlaubt.

14. System, aufweisend ein lokales Netz (N1), primäre Sicherungsmittel (20), die über das lokale Netz (N1) erreichbar sind, Verbindungsmittel mit einem zweiten Netz (N2), über das sekundäre Sicherungsmittel (26) erreichbar sind, mindestens ein Endgerät, aufweisend ein Sicherungsmodul nach einem der Ansprüche 6 bis 9, ein Synchronisierungsmodul (22), aufweisend Verarbeitungsmittel, die derart konfiguriert sind, um:
- die Information zu empfangen, die anzeigt, dass eine Replikation der empfangenen Gruppe von Daten auf allen Sicherungsmitteln und auf der Synchronisierungsvorrichtung notwendig ist;
- die von den sekundären Sicherungsmitteln empfangene Gruppe von Daten an die primären Sicherungsmittel zwecks Replikation zu übertragen.

15. System nach Anspruch 10, wobei die Verarbeitungsmittel des Synchronisierungsmoduls (22) ferner derart konfiguriert sind, um die von den primären Sicherungsmitteln empfangene Gruppe von Daten zwecks Replikation auf den sekundären Sicherungsmittel an die sekundären Sicherungsmittel zu übertragen.

16. System nach Anspruch 10 oder 11, wobei das zweite Netz (N2) ein Netz ist, das den Zugriff auf das Internet erlaubt.

17. Rechnerprogramm, aufweisend Befehle für die Ausführung der Schritte des Verfahrens nach einem der Ansprüche 1 bis 6, wenn das Programm von einem Prozessor ausgeführt wird.

18. Von einem Rechner lesbarer Speicherträger, auf dem ein Rechnerprogramm gespeichert ist, das Befehle für die Ausführung der Schritte des Verfahrens nach einem der Ansprüche 1 bis 6 umfasst.

## Claims

1. A method for backing up data stored on a terminal (12, 14, 16), the terminal including means for connecting to a local area network (N1) via which primary backup means are accessible, the terminal further including means for connecting to a second network (N2) via which secondary backup means (26) are accessible, **characterized in that** it includes the following steps of:
• determining (120) a data set to be backed up among the data stored on the terminal;
• if the terminal is connected to the local area network, transferring (140) the data set to the primary backup means;
• if the terminal is connected to the second network,
• transferring (150) the data set to the secondary backup means; and,
• replicating (240) the data set received by the secondary backup means on the primary backup means.

2. The method for backing up data stored on a terminal (12, 14, 16), the terminal including means for connecting to a local area network (N1) via which primary backup means are accessible, the terminal further including means for connecting to a second network (N2) via which secondary backup means (26) are accessible, **characterized in that** it includes the following steps of:
• determining (120) a data set to be backed up among the data stored on the terminal;
• if the terminal is connected to the local area network, and if the primary backup means are available to perform an additional backup, transferring (140) the data set to the primary backup means;
• if the terminal is connected to the local area network, and if the primary backup means are unavailable to perform an additional backup,
• transferring (140) the data set to the secondary backup means;
• replicating (240) the data set received by the secondary backup means on the primary backup means.

3. The method according to claim 2, further comprising the following steps:
• if the terminal is connected to the second network:
• transferring (150) the data set to secondary backup means; and,
• replicating (240) the data set received by the secondary backup means on the primary backup means.

4. The method according to any of the preceding claims, wherein, following the transfer (140) of the data set to the primary backup means; a replication (240) of the data set received by the primary backup means is carried out on the secondary backup means.

5. The method according to any of the preceding claims, wherein, information allowing to identify data transmitted to the primary and secondary backup means (20, 26) are recorded in a backed up data log during an update step (160).

6. The method according to any of the preceding claims, wherein, information allowing to identify the date of the last change made to the data transmitted to the primary and secondary backup means are recorded in a backed up data log, during an update step (160).

7. The method according to any of the preceding claims, wherein the data set to be backed up is determined by identifying among the data stored on the terminal those for which no information is comprised in the log.

8. The method according to any of the preceding claims, wherein the replication step (240) is triggered if the data set transmitted to at least one backup means does not comprise all data identified in the log.

9. A data backup module (18) adapted to be onboard a terminal (12, 14, 16) including means for connecting to a local area network (N1) via which primary backup means are accessible, and means for connecting to a second network (N2) via which secondary backup means (26) are accessible, **characterized in that** it includes processing means configured so as to:
• determine a data set to be backed up among the data stored on the terminal;
• if the terminal is connected to the local area network, transfer the data set to the primary backup means;
• if the terminal is connected to the second network,
• transfer the data set to the secondary backup means; and,
• transmit, to a synchronization module (22), an information indicating that a replication of the data set received by the secondary backup means on the primary backup means is required.

10. The data backup module (18) adapted to be onboard a terminal (12, 14, 16) including means for connecting to a local area network (N1) via which primary backup means are accessible, and means for connecting to a second network (N2) via which secondary backup means (26) are accessible, **characterized in that** it includes processing means configured so as to:
• determine a data set to be backed up among the data stored on the terminal;
• if the primary backup means are accessible to the terminal and available to perform an additional backup, transfer the data set to the primary backup means;
• if the primary backup means are not accessible to the terminal or if the primary backup means are unavailable to perform an additional backup:
• transfer the data set to the secondary backup means; and,
• transmit to a synchronization module, an information indicating that a replication of the data set received by the secondary backup means on the primary backup means is required, after verification of a backed up data log.

11. The module according to claim 6, wherein the processing means are further configured such that information allowing to identify the data transmitted to the backup means are recorded in the backed up data log.

12. The module according to claim 6 or 7, wherein the processing means are further configured so as to trigger the sending of the information that a replication of the data set received by the secondary backup means on the primary backup means is required, if the data set transmitted to the primary backup means does not comprise all data identified in the log.

13. The module according to any one of claims 7 to 8, wherein the second network (N2) is a network allowing access to Internet.

14. A system including a local area network (N1), primary backup means (20) accessible via the local area network (N1), means for connecting to a second network (N2) via which secondary backup means (26) are accessible, at least one terminal including a backup module according to any one of claims 6 to 9, a synchronization module (22) including processing means configured so as to:
• receive the information indicating that a replication of the received data set is required on all backup means and on the synchronization device;
• transmit to the primary backup means for replication the data set received by the secondary backup means.

15. The system according to claim 10, wherein the processing means of the synchronization module (22) are further configured so as to transmit to the secondary backup means for replication the data set received by the primary backup means on the secondary backup means.

16. The system according to claim 10 or 11, wherein the second network (N2) is a network allowing access to Internet.

17. A computer program including instructions for performing the steps of the method according to any one of claims 1 to 6, when said program is run by a processor.

18. A computer-readable recording medium on which a computer program is recorded, comprising instructions for performing the steps of the method according to any one of claims 1 to 6.
